# EUROPÄISCHE PATENTSCHRIFT

(11) **EP 3 123 857 B1**
(45) Veröffentlichungstag und Bekanntmachung des Hinweises auf die Patenterteilung: **11.05.2022**
(21) Anmeldenummer: 16179702.2
(22) Anmeldetag: 15.07.2016
(51) Int. Cl.: A01F 15/07

(54) **BALLENWICKELEINRICHTUNG, ERNTEBERGUNGSGERÄT UND VERFAHREN**
BALER, HARVEST COLLECTING APPARATUS AND METHOD
DISPOSITIF D'ENRUBANNAGE DE BALLES, APPAREIL DE RÉCUPÉRATION DE CUEILLETTE ET PROCÉDÉ

(30) Priorität: 31.07.2015 DE 102015214708
(43) Veröffentlichungstag der Anmeldung: 01.02.2017
(73) Patentinhaber: Deere & Company, Moline, IL 61265 (US)
(72) Erfinder: Guerin, Sebastien, 25000 Besancon (FR); Chapon, Emmanuel, 70100 Velet (FR)
(74) Vertreter: Reichert, Christian

(56) Entgegenhaltungen:
- EP-A1- 0 865 722
- EP-A2- 1 050 207
- WO-A1-98/44776
- GB-A- 2 196 227

## Beschreibung

Die vorliegende Erfindung betrifft eine Ballenwickeleinrichtung zur Umhüllung eines Ballens mit einem Hüllmaterial, mit einer Aufnahmevorrichtung zur Aufnahme eines Ballens während des Umhüllens und mit wenigstens einem Wickelarm, ein Erntebergungsgerät, vorzugsweise in der Art einer Ballenpresse, einer Kombipresse oder eines Ballenwickelgeräts, mit einer Ballenwickeleinrichtung, sowie ein Verfahren zur Anpassung einer solchen Ballenwickeleinrichtung .

Ballenwickeleinrichtungen werden zur Verpackung von Ballen vorzugsweise von durch Ballenpressen aus Erntegut, beispielsweise aus Gras, gebildeten Ballen genutzt. Diese werden zur Gewinnung von kleineren Silagemengen komplett in ein luftundurchlässiges Material, beispielsweise in eine Folie, eingehüllt.

Übliche Ballenwickeleinrichtungen können Teil von Erntebergungsgeräten, beispielsweise in der Art eigenständiger Ballenwickelgeräte, sein, die an eine Ballenpresse oder ein anderes einen Ballen abgebendes Gerät angehängt werden, und einen Ballen nach Abschluss eines Pressvorgangs von der Ballenpresse übernehmen. Alternativ können sie einen Bestandteil eines von einem Erntebergungsgerät bzw. einer Ballenpresse unabhängigen Ballenwickelgeräts darstellen, beispielsweise in der Art, dass ein bereits vorgepresster Ballen auf die Ballenwickeleinrichtung des Ballenwickelgeräts aufgelegt wird, um diesen unabhängig von dem eigentlichen Pressvorgang zu umhüllen. Eine Ballenwickeleinrichtung kann aber auch fester oder lösbarer bzw. starrer oder beweglicher, beispielsweise verschwenkbarer, Bestandteil eines Erntebergungsgeräts, beispielsweise einer Ballenpresse bzw. einer auch als Kombipresse bezeichneten Presse-/Wickelkombination sein, wobei die Wickeleinrichtung der eigentlichen Presseinrichtung funktional nachgeordnet ist.

Ballenwickeleinrichtungen weisen üblicherweise eine Aufnahmeeinrichtung in der Art eines Wickeltisches auf, der einen von einem beispielsweise als Ballenpresse ausgebildeten Erntebergungsgerät gebildeten bzw. abgegebenen Ballen aufnimmt. Abhängig von der Ballenpresse und/oder den jeweiligen Anforderungen an die Ballenpresse können die aufzunehmenden Ballen einen unterschiedlichen Durchmesser aufweisen Bei bekannten Ballenwickeleinrichtungen ist zur Anpassung an verschiedene Ballendurchmesser ein aufwändiger Umbau des Ballenwickelgeräts häufig in der Art notwendig, dass Hüllmaterial führende Bauteile, wie zum Beispiel Wickelarme, in der Höhe verstellt werden müssen.

In EP 1 050 207 A2 wird eine Ballenwickeleinrichtung offenbart, welche einen Tisch mit vier Bändern aufweist, die eine flexible Ballenstützplattform bilden. Eine Antriebsrolle für die Bänder ist seitlich eines zu wickelnden Ballens unter Einwirkung eines Dämpfers angeordnet, um sich zu bewegen und eine sich ändernde Ausrichtung eines Ballens in einer optimalen, ausgewogenen Weise aufzunehmen. Die Bänder sind ebenfalls um Rollen herum ausgebildet, um die Tischbreite variabel zu gestalten. WO 98/44776 offenbart eine Ballenwickeleinrichtung zur Umhüllung eines parallelepipedförmigen Ballens mit einem Hüllmaterial.

Es ist bekannt, den Wickeltisch derart auszubilden, dass dieser Stützrollen enthält, die zueinander horizontal beabstandet sind und den Ballen umfangsmäßig an wenigstens zwei verschiedenen umfangspunkten abstützen. Je nach Ausführung können diese Stützrollen auch von einem Gurt umgeben sein, so dass der Ballen nicht nur punktuell durch die Stützrollen sondern flächig auf einem Umfangsbereich durch den Gurt abgestützt wird. Der Abstand zwischen den Stützrollen bestimmt dabei die Mittenhöhenlage des Ballens, so dass bei gleich beabstandeten Stützrollen und zu umwickelnde Ballen mit verschiedenen Durchmessern die Mittenhöhenlage (Höhe des Mittelpunktes) des Ballens variiert und der Ballen nicht mehr mittig zum Hüllmaterial am Wickelarm positioniert ist. Somit sind Wickeltische in der Regel nur auf einen Ballendurchmesser optimal ausgerichtet und müssen bei sich variierenden Ballendurchmesser in ihrer Höhe verstellt werden. Dies erfordert aufwändige Verstelleinrichtungen und/oder zeitraubende Umbaumaßnahmen. Ferner ist es bekannt, dieses Problem auch durch einen Wechsel der Stützrollen mit größeren oder kleineren Durchmesser zu beheben oder den horizontalen Abstand der vorhandenen Stützrollen zueinander zu vergrößern bzw. zu verkleinern. Beides gestaltet sich ebenfalls als montageaufwändig und zeitraubend. Andere Lösungen sehen vor, bei Wickeltischen die einen Gurt verwenden, die Gurtspannung zu variieren und dadurch den Ballen anzuheben bzw. abzusenken. Durch Straffen des Gurts für Ballen mit kleinerem Durchmesser reduziert sich jedoch auch die Auflagefläche des Ballens auf dem Gurt, wodurch weitere Nachteile bei der Ballenmitnahme (Rotation des Ballens beim Wickeln) auftreten können.

Die der Erfindung zugrunde liegende Aufgabe wird darin gesehen, eine Ballenwickeleinrichtung, der eingangs genannten Art anzugeben, durch welche die vorgenannten Nachteile überwunden werden.

Die Aufgabe wird erfindungsgemäß durch die Lehre der Patentansprüche 1, 7 bzw. 8 gelöst. Weitere vorteilhafte Ausgestaltungen und Weiterbildungen der Erfindung gehen aus den Unteransprüchen hervor.

Erfindungsgemäß wird eine Ballenwickeleinrichtung der eingangs genannten Art derart ausgebildet, dass die Aufnahmevorrichtung einen Aufnahmetisch mit horizontal zueinander beabstandeten Stützrollen zur Abstützung eines Ballens aufweist, wobei ein Ballen durch eine erste Stützrolle an einem ersten Umfangspunkt und wahlweise durch wenigstens eine zweite oder eine dritte Stützrolle an einem zum ersten Umfangspunkt ballenumfangsmäßig beabstandeten zweiten Umfangspunkt abstützbar ist, wobei ein schwenkbarer Stützrollenhalter enthalten ist, an dem die wenigstens zweite und dritte Stützrolle gelagert sind, wobei der Stützrollenhalter aus einer ersten Stellung, in der die wenigstens zweite Stützrolle eine Stützposition zur Abstützung eines Ballens einnimmt, in wenigstens eine zweite Stellung, in der die wenigstens dritte Stützrolle eine Stützposition zur Abstützung eines Ballens einnimmt, verschwenkbar ist. Durch Verschwenken des Stützrollenhalters aus der ersten Stellung in eine zweite Stellung, und umgekehrt, ist der Abstand zwischen der ersten Stützrolle zu der eine Stützposition einnehmenden zweiten oder dritten Stützrolle veränderbar. Dadurch wird es mögliche den Aufnahmetisch derart zu modifizieren, dass dessen Form an den Durchmesser eines zu wickelnden Ballens angepasst wird, ohne dass aufwändige konstruktive und kostspielige Maßnahmen getroffen werden müssen. Die Aufnahmevorrichtung ist durch einfaches Verschwenken des Stützrollenhalters derart verstellbar, dass der Ballenmittelpunkt des zu umhüllenden Ballens für unterschiedliche Ballendurchmesser mit Bezug auf den wenigstens einen Wickelarm eine zumindest im wesentlichen gleiche Position einnimmt. Dies vereinfacht die Anpassung einer Ballenwickeleinrichtung an Ballen unterschiedlichen Durchmessers. Nimmt der Ballen als solcher bzw. der Ballenmittelpunkt des Ballens für jeden Ballendurchmesser bzw. jeden Ballendurchmesser für den die Ballenwickeleinrichtung geeignet ausgebildet ist, die gleiche bzw. eine zumindest im wesentlichen gleiche Position ein, so kann auf eine Verstellung anderer Bauteile der Ballenwickeleinrichtung, insbesondere eines Wickelarms oder mehrerer Wickelarme und/oder eines Rahmens der Ballenwickeleinrichtung verzichtet werden. Der schwenkbare Stützrollenhalter kann dabei in Bezug auf die Fahrtrichtung einer Ballenpresse am Aufnahmetisch vorn oder hinten gelagert sein. Die zweite Stellung des Stützrollenhalters ist dabei variabel einstellbar, so dass insgesamt mehrere zu einer ersten Stellung verschiedene Stellungen einstellbar sind und damit eine angepasste Einstellung für eine Vielzahl von Ballen mit verschiedenen Ballendurchmessern möglich ist. Es ist denkbar, den Stützrollenhalter auch mit mehr als zwei Stützrollen auszubilden, um so die Variabilität der Form des Aufnahmetisches noch zu erhöhen.

Die Stützrollen können von einem Gurt umschlungen sein, wodurch zusätzlich zu den an den genannten Umfangspunkten geschaffene Abstützung eine flächenartige Abstützung durch den Gurt auf einer Oberseite der Umschlingung zwischen den Stützrollen geschaffen wird.

Die nicht eine Stützposition einnehmende Stützrolle kann eine auf den Gurt auf einer Unterseite der Umschlingung eingreifende Stellung einnehmen. Dadurch kann die betreffende Stützrolle gleichzeitig als Gurtstraffer eingesetzt werden, wodurch die Form der von dem Gurt gebildete Auflagefläche beeinflusst werden kann, so dass der Gurt auf der Oberseite der Umschlingung mehr oder weniger durchhängt. Es wird ferner gewährleistet, dass eine gewünschte Gurtspannung auch bei unterschiedlichen Aufnahmetischformen (Durchhängen der Oberseite des Gurts) aufrechterhalten werden kann.

Die an dem Stützrollenhalter gelagerte zweite und wenigstens dritte Stützrolle können unterschiedliche Durchmesser aufweisen. Bei der Verwendung eines die Stützrollen umschlingenden Gurtes wird dadurch die Spannung des Gurtes maßgeblich beeinflusst, womit die Form des Aufnahmetisches und damit die Auflagefläche für einen Ballen variierbar ist.

Das Verschwenken des Stützrollenhalters kann manuell oder motorisch erfolgen, letzteres beispielsweise durch einen Hydraulikzylinder oder durch einen elektrischen Stellmotor, der an dem Stützrollenhalter, den Stützrollen oder einer Schwenkachse des Stützrollenhalters angreift und die Schwenkposition variiert. Die motorische Steuerung der Schwenkstellung kann durch eine entsprechende Steuereinheit (hydraulisch bzw. elektrisch) erfolgen, so dass für verschiedene Ballendurchmesser die geeignete Schwenkstellung des Stützrollenhalters automatisch bzw. programmierbar einstellbar ist oder durch manuelle Einstellung an der Steuereinheit bzw. an einer dafür vorgesehenen Eingabeeinrichtung erfolgen kann.

Die Schwenkachse des Stützrollenhalters kann mittig oder außermittig zwischen Drehachsen der Stützrollen angeordnet sein, wobei die Schwenkachse und die Drehachsen vorzugsweise in einer Verbindungslinie fluchtend zueinander angeordnet sind. Hier kann jedoch auch nach Bedarf eine Anordnung der Drehachsen und Schwenkachse zueinander gewählt werden die eine nicht in einer Verbindungslinie fluchtende Ausrichtung vorsieht.

Eine derartige Ballenwickeleinrichtung kann an einem Erntebergungsgerät, vorzugsweise an einem Erntebergungsgerät in der Art einer Ballenpresse, einer Kombipresse oder eines Ballenwickelgeräts vorgesehen sein. Die Ballenwickeleinrichtung kann integraler Teil eines solchen Erntebergungsgeräts oder auch optional vorgesehen sein.

Ein Verfahren zum Einstellung einer erfindungsgemäßen Ballenwickeleinrichtung, vorzugsweise in Verbindung mit einem zuvor beschriebenen Erntebergungsgerät, lehrt, dass die Ballenwickeleinrichtung zur Anpassung an Ballen unterschiedlichen Durchmessers derart verstellt wird, dass der Mittelpunkt des Ballens bei unterschiedlichen Ballendurchmessern zumindest im Wesentlichen die gleiche Position einnimmt.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Presse mit einer nachgeordneten Ballenwickeleinrichtung mit einer einen Aufnahmetisch umfassenden Aufnahmeeinrichtung,
- Fig. 2: eine schematische Darstellung des Aufnahmetisches aus Figur 1 mit einem schwenkbaren Stützrollenhalter mit zwei Stützrollen in einer ersten Stellung und
- Fig. 3: eine schematische Darstellung des Aufnahmetisches aus Figur 1 und 2 mit dem schwenkbaren Stützrollenhalter mit zwei Stützrollen in einer zweiten Stellung.

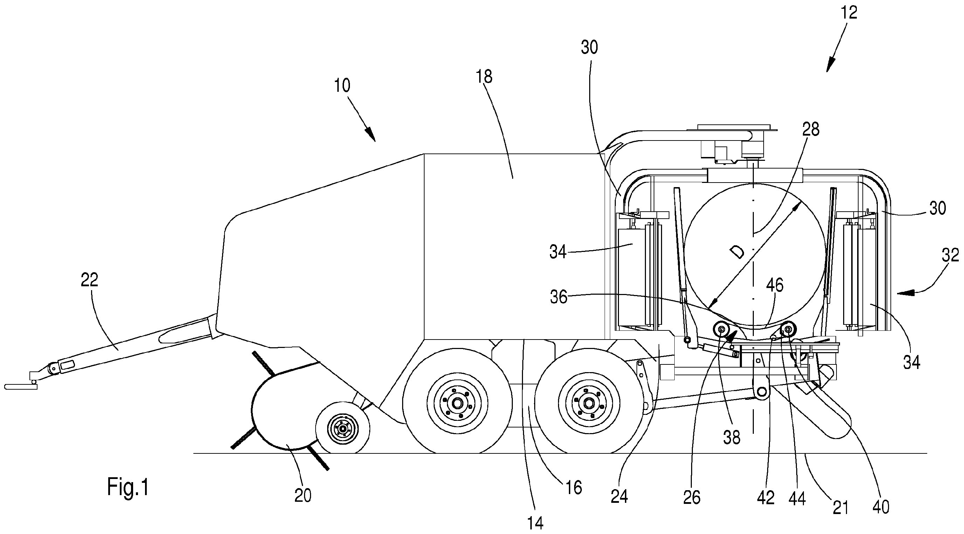

Fig. 1 zeigt ein Erntebergungsgerät 10 in der Art einer als Rundballenpresse ausgebildeten Presse mit einer nachgeordneten Ballenwickeleinrichtung 12. Das Erntebergungsgerät 10 weist im gezeigten Ausführungsbeispiel einen Rahmen 14, ein Fahrgestell 16, einen Pressraum 18 und eine Zuführvorrichtung 20 auf. Weiter ist eine Deichsel 22 vorgesehen, mittels der das Erntebergungsgerät 10 an ein nicht gezeigtes Zugfahrzeug, wie beispielsweise eine landwirtschaftliche Arbeitsmaschine bzw. einen Ackerschlepper anhängbar ist. Das Erntebergungsgerät 10 kann grundsätzlich von jeder herkömmlichen Bauart sein. Gemäß der Figuren handelt es sich bei dem Erntebergungsgerät 10 um eine Rundballenpresse. Eine solche kann beispielsweise einen festen oder variablen Pressraum aufweisen, und sowohl in der Landwirtschaft als auch im industriellen Bereich eingesetzt werden. Vorzugsweise ist die Presse 10 von der Bauart gemäß der deutschen Patentanmeldung 101 53 540.6.

Der Rahmen 14 wird von einem Schweiß- und/oder Schraubzusammenbau gebildet und stützt sich mittels des Fahrgestells 16 auf dem Untergrund 21 ab. Das Fahrgestell 16 ist in der Zeichnung in Tandemachsbauweise mit zwei Achsen dargestellt, von denen jede an jeder Seite mit einem Rad versehen ist. Auch eine Ausgestaltung mit nur einer Achse oder eine Abstützung mittels Raupen oder anderer geeigneter Mittel ist denkbar.

Die Ballenwickeleinrichtung 12 weist einen Rahmen 24, eine Aufnahmevorrichtung 26, zur Aufnahme eines zu umhüllenden Ballens 28, sowie Wickelarme 30 auf, die zur Umhüllung des Ballens 28 mit einem Durchmesser D mit einem Hüllmaterial, beispielsweise einer Folie, mittels eines nicht gezeigten, geeigneten Antriebs in Bewegung versetzt werden können. Die Wickelarme 30 weisen in ihren Endbereichen Hüllmittelträger 32 zur Aufnahme eines Hüllmittelvorrats 34, beispielsweise in der Art von Rollen, auf.

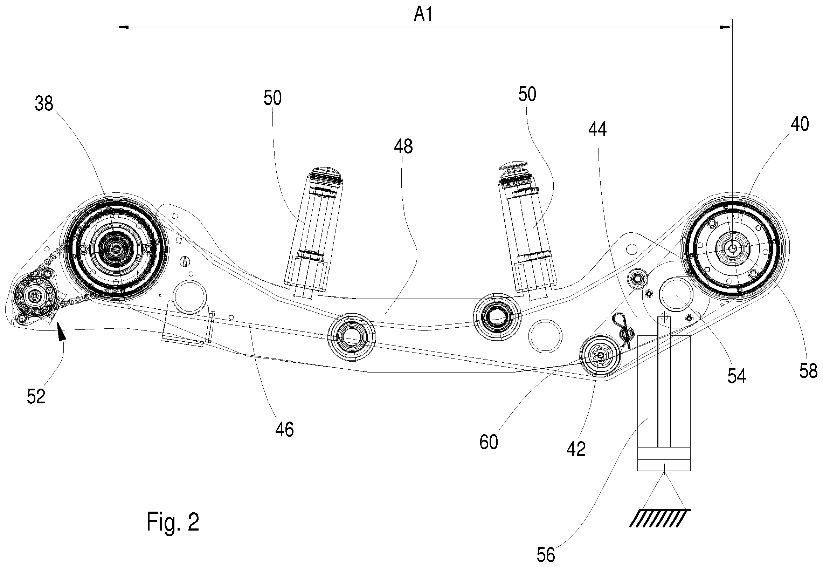

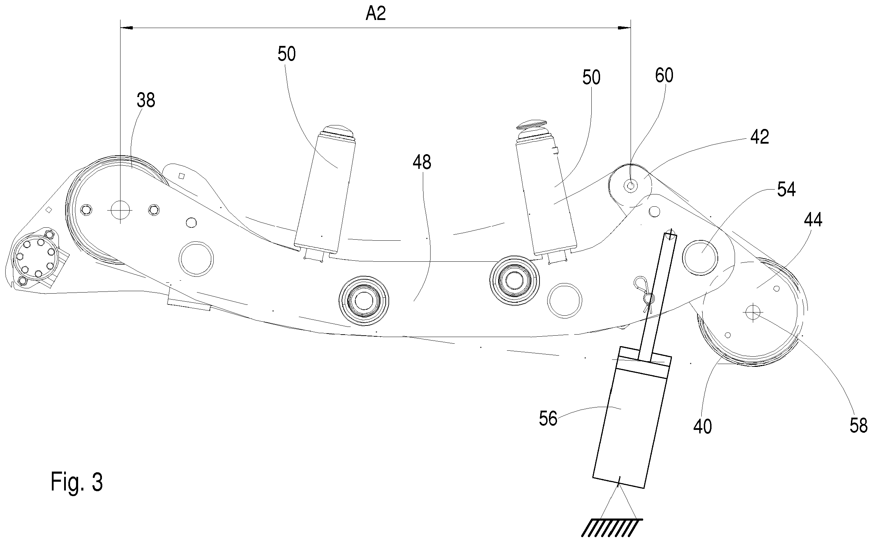

Die Aufnahmevorrichtung 26 weist einen Aufnahmetisch 36 mit einer ersten, einer zweiten und einer dritten Stützrolle 38, 40, 42 auf. Die zweite und die dritte Stützrolle 40, 42 sind an einem schwenkbaren Stützrollenhalter 44 gelagert. Die Stützrollen 38, 40, 42 werden von einem flexiblen Gurt 46 umschlungen. Der Aufnahmetisch 36 ist über einen Rahmen 48 der Aufnahmevorrichtung 26 und damit verbundenen Dämpfungsmitteln 50 an dem Rahmen 24 der Ballenwickeleinrichtung 12 befestigt (siehe Figuren 2 und 3).

Die erste Stützrolle 38 ist über eine Antriebseinrichtung 52 antreibbar ausgebildet. Der Stützrollenhalter 44 ist über eine Pendelachse 54 schwenkbar angeordnet. Ein Aktuator 56, in Form eines Hydraulikzylinders, greift an der Pendelachse 54 an und versetzt diese bei Bedarf in Drehung, wobei eine erste Stellung gemäß Figur 2 mit eingefahrenem Hydraulikzylinder 56 und eine zweite Stellung gemäß Figur 3 mit ausgefahrenem Hydraulikzylinder 56 dargestellt ist. Die Stützrollen 40 und 42 sind auf am Stützrollenhalter 44 gelagerten Drehachsen 58, 60 gelagert.

Allgemein wird im Betrieb ein Ballen 28 von dem Erntebergungsgerät 10 nach Abschluss des Pressvorgangs abgegeben und an die Ballenwickeleinrichtung 12 mittels bekannter, nicht näher dargestellter Mittel übergeben. Der Ballen 28 wird durch die Aufnahmevorrichtung 26 in der Art aufgenommen, dass der Ballen 28 durch die erste und zweite Stützrolle 38 und 40 (Figur 2) bzw. durch die erste und dritte Stützrolle 38, 42 (Figur 3) an seinem Umfang abgestützt wird. Der Gurt 46 ist hierbei unterstützend vorgesehen und bildet zusätzlich eine Auflagefläche. Nach Aufnahme des Ballens 28 durch die Aufnahmeeinrichtung 26 wird der Ballen mittels der Wickelarme 30 und den daran geführten Hüllmittelträgern 32 mit Hüllmittelvorrat 34 umhüllt.

Die erste und die zweite Stützrolle 38, 40 sind hier mit gleichem Durchmesser ausgebildet wobei die dritte Stützrolle 42 einen geringeren Durchmesser aufweist. Gemäß Figur 2 nimmt neben der ersten Stützrolle 38 die zweite Stützrolle 40 eine Stützposition zur Abstützung eines Ballens 28 ein, wobei sich die zweite Stützrolle 40 in einer oberen Schwenkposition und die dritte Stützrolle 42 in einer unteren Schwenkposition befindet. Der Hydraulikzylinder 56 ist in eingefahrener Stellung. Die in Figur 2 gezeigte erste Stellung des Stützrollenhalters 44 erwirkt damit einen ersten Abstand A1 zwischen der ersten und der zweiten Stützrolle 38, 40. Durch Verschwenken des Stützrollenhalters 44 in eine zweite Stellung, welches durch Aktivierung bzw. Ausfahren des Hydraulikzylinders 56 erfolgt, wird die dritte Stützrolle 42 in eine obere Schwenkposition und die zweite Stützrolle 40 in eine untere Schwenkposition gebracht, was in Figur 3 dargestellt ist. Die in Figur 3 gezeigte Stellung des Stützrollenhalters 44 erwirkt damit einen zweiten Abstand A2 zwischen der ersten und der dritten Stützrolle 38, 42, wobei der erste Abstand A1 gemäß Figur 2 größer ausgebildet ist als der zweite Abstand A2 gemäß Figur 3. Gleichzeitig bewirkt die in Figur 3 gezeigte Stellung des Stützrollenhalters 44, bzw. die untere Schwenkstellung der zweiten Stützrolle 40, dass der Gurt 46 auf seiner Unterseite, welche in Figur 3 durch einen im Uhrzeigersinn zwischen der ersten und dritten Stützrolle 38, 42 verlaufenden Teil des Gurtes 46 definiert ist, mit der zweiten Stützrolle 40 im Eingriff steht und gespannt wird und sich auf seiner Oberseite, welche in Figur 3 durch einen im Uhrzeigersinn zwischen der ersten und dritten Stützrolle 38, 42 verlaufenden Teil des Gurtes 46 definiert ist, verkürzt und damit eine durch die Oberseite des Gurtes gebildete Auflagefläche angehoben wird. Durch den geringeren Abstand A2 und die angehobene Auflagefläche wird der Aufnahmetisch 36 an einen geringeren Durchmesser eines kleineren Ballens 28 angepasst.

Ausgehend von der in Figur 3 gezeigten zweiten Stellung des Stützrollenhalters 44 wird durch entgegengesetztes Verschwenken des Stützrollenhalters in sein erste Stellung, welches durch Einfahren des Hydraulikzylinders 56 erfolgt, gemäß Figur 2 die dritte Stützrolle 42 wieder in eine untere Schwenkposition und die zweite Stützrolle 40 wieder in eine obere Stützposition gebracht und damit auch der zwischen den sich in Stützposition befindlichen Stützrollen 38, 40 ausgebildete größere Abstand A1 eingestellt. Gleichzeitig bewirkt die in Figur 2 gezeigte Stellung des Stützrollenhalters 44 bzw. die untere Schwenkstellung der dritten Stützrolle 42 das der Gurt 46 auf seiner Unterseite, welche in Figur 2 durch einen im Uhrzeigersinn zwischen der dritten und ersten Stützrolle 42, 38 verlaufenden Teil des Gurtes 46 definiert ist, mit der dritten Stützrolle 42 im Eingriff steht und gegenüber der Stellung des Stützrollenhalters aus Figur 3 insgesamt entspannt wird und sich auf seiner Oberseite, welche in Figur 2 durch einen im Uhrzeigersinn zwischen der ersten und zweiten Stützrolle 38, 40 verlaufenden Teil des Gurtes 46 definiert wird, verlängert und damit eine durch die Oberseite des Gurtes gebildete Auflagefläche abgesenkt wird. Durch den geringeren Abstand A2 und die abgesenkte Auflagefläche wird der Aufnahmetisch 36 an einen größeren Durchmesser eines größeren Ballens 28 angepasst. Die in den Figuren 2 und 3 dargestellte Ausführung der Aufnahmevorrichtung 26 bewirkt letztendlich, dass der Mittelpunkt eines kleinen Ballens 28 gegenüber dem Mittelpunkt eines großen Ballens 28 in etwa auf gleicher Höhe verbleibt und eine Umwicklung eines Ballens mit Hüllmaterial unabhängig von der Größe des Ballens 28 im Wesentlichen mittig zum Ballen 28 erfolgen kann.

Neben den beschriebenen Stellungen des Stützrollenhalters 44 gemäß der Figuren 2 und 3 sind selbstverständlich auch Zwischenstellungen einstellbar, die durch entsprechende Ansteuerung des Hydraulikzylinders 56 einstellbar sind. Somit sind neben den genannten Extremen, nämlich einer Einstellung für einen großen Ballen 28 gemäß Figur 2 und einer Einstellung für einen kleinen Ballen 28 gemäß Figur 3 auch Einstellungen möglich, die für Ballengrößen geeignet sind, die ein entsprechendes Zwischenmaß darstellen.

Neben der gezeigten Ausführungsform ist es möglich das Verschwenken des Stützrollenhalters auch manuell vorzunehmen, beispielsweise durch einen an der Pendelachse 54 angebrachten Hebel (nicht gezeigt) mit einer für entsprechend gewünschte Schwenkstellungen des Stützrollenhalters 44 ausgebildeten Arretierung. Die Durchmesser der Stützrollen 38, 40, 42 können ebenfalls variieren, insbesondere auch die der angetriebenen ersten Stützrolle 38.

## Patentansprüche

1. Ballenwickeleinrichtung (12) zur Umhüllung eines Ballens (28) mit einem Hüllmaterial, mit einer Aufnahmevorrichtung (26) zur Aufnahme des Ballens (28) während des Umhüllens und mit wenigstens einem Wickelarm (30), wobei die Aufnahmevorrichtung (26) einen Aufnahmetisch (36) mit horizontal zueinander beabstandeten Stützrollen (38, 40, 42) zur Abstützung eines Ballens (28) aufweist, wobei ein Ballen (28) durch eine erste Stützrolle (38) an einem ersten Umfangspunkt abstützbar ist, wobei ein schwenkbarer Stützrollenhalter (44) enthalten ist, an dem wenigstens eine zweite und dritte Stützrolle (40, 42) gelagert sind, **dadurch gekennzeichnet, dass** der Ballen wahlweise durch wenigstens die zweite oder dritte Stützrolle (40, 42) an einem zum ersten Umfangspunkt ballenumfangsmäßig beabstandeten zweiten Umfangspunkt abstützbar ist, wobei der Stützrollenhalter (44) aus einer ersten Stellung, in der die wenigstens zweite Stützrolle (40) eine Stützposition zur Abstützung eines Ballens (28) einnimmt, in wenigstens eine zweite Stellung, in der die wenigstens dritte Stützrolle (42) eine Stützposition zur Abstützung eines Ballens (28) einnimmt, verschwenkbar ist, so dass durch Verschwenken des Stützrollenhalters (44) aus der ersten Stellung in eine zweite Stellung, und umgekehrt, der Abstand (A1, A2) zwischen der ersten Stützrolle (38) zu der eine Stützposition einnehmenden zweiten oder dritten Stützrolle (40, 42) veränderbar ist.

2. Ballenwickeleinrichtung (12) nach Anspruch 1, **dadurch gekennzeichnet, dass** ein die Stützrollen (38, 40, 42) umschlingender Gurt (46) vorgesehen ist.

3. Ballenwickeleinrichtung (12) nach Anspruch 1 oder 2, **dadurch gekennzeichnet, dass** die nicht eine Stützposition einnehmende zweite oder dritte Stützrolle (40, 42) eine auf den Gurt (46) auf einer Unterseite der Umschlingung eingreifende Stellung einnimmt.

4. Ballenwickeleinrichtung (12) nach einem der Ansprüche 1 bis 3, **dadurch gekennzeichnet, dass** die wenigstens zweite Stützrolle (40) und die wenigstens dritte Stützrolle (42) unterschiedliche Durchmesser aufweisen.

5. Ballenwickeleinrichtung (12) nach einem der vorherigen Ansprüche, **dadurch gekennzeichnet, dass** ein Verschwenken des Stützrollenhalters (44) manuell oder motorisch erfolgt.

6. Ballenwickeleinrichtung (12) nach einem der Ansprüche 1 bis 5, **dadurch gekennzeichnet, dass** eine Schwenkachse (54) des Stützrollenhalters (44) zwischen Drehachsen (58, 60) der Stützrollen (40, 42) angeordnet ist, wobei die Schwenkachse (54) und die Drehachsen (58, 60) auf einer Verbindungslinie liegend zueinander angeordnet sind.

7. Erntebergungsgerät (10), vorzugsweise in der Art einer Ballenpresse, einer Kombipresse oder eines Ballenwickelgeräts, mit wenigstens einer Ballenwickeleinrichtung (12) nach einem oder mehreren der vorherigen Patentansprüche.

8. Verfahren zur Anpassung einer Ballenwickeleinrichtung (12) zur Umhüllung eines Ballens (28) mit einem Hüllmaterial, mit einer Aufnahmevorrichtung (26) zur Aufnahme des Ballens (28) während des Umhüllens und mit wenigstens einem Wickelarm (30), und die Aufnahmevorrichtung (26) einen Aufnahmetisch (36) mit horizontal zueinander beabstandeten Stützrollen (38, 40, 42) zur Abstützung eines Ballens (28) aufweist, wobei ein Ballen (28) durch eine erste Stützrolle (38) an einem ersten Umfangspunkt abgestützt wird, und ein schwenkbarer Stützrollenhalter (44) enthalten ist, an dem wenigstens eine zweite und dritte Stützrolle (40, 42) gelagert werden, und die Ballenwickeleinrichtung (12) zur Anpassung an Ballen (28) unterschiedlichen Durchmessers derart verstellt wird, dass der Stützrollenhalter (44) aus einer ersten Stellung in eine zweite Stellung verschwenkt wird, **dadurch gekennzeichnet, dass** der Ballen wahlweise durch wenigstens die zweite oder dritte Stützrolle (40, 42) an einem zum ersten Umfangspunkt ballenumfangsmäßig beabstandeten zweiten Umfangspunkt abgestützt wird, wobei der Stützrollenhalter (44) aus einer ersten Stellung, in der die wenigstens zweite Stützrolle (40) eine Stützposition zur Abstützung eines Ballens (28) einnimmt, in wenigstens eine zweite Stellung, in der die wenigstens dritte Stützrolle (42) eine Stützposition zur Abstützung eines Ballens (28) einnimmt, verschwenkt wird, so dass durch Verschwenken des Stützrollenhalters (44) aus der ersten Stellung in eine zweite Stellung, und umgekehrt, der Abstand (A1, A2) zwischen der ersten Stützrolle (38) zu der eine Stützposition einnehmenden zweiten oder dritten Stützrolle (40, 42) verändert wird.

## Claims

1. Bale wrapping device (12) for enveloping a bale (28) with an enveloping material, having a receiving apparatus (26) for receiving the bale (28) during the enveloping operation, and having at least one wrapping arm (30), wherein the receiving apparatus (26) has a receiving table (36) with horizontally spaced-apart support rollers (38, 40, 42) for supporting a bale (28), wherein a bale (28) is supportable by a first support roller (38) at a first circumferential point, wherein a pivotable support-roller holder (44), on which at least a second and third support roller (40, 42) are mounted, is contained, **characterized in that** the bale is optionally supportable by at least the second or third support roller (40, 42) at a second circumferential point that is spaced apart from the first circumferential point around the bale circumference, wherein the support-roller holder (44) is pivotable out of a first position, in which the at least second support roller (40) takes up a supporting position for supporting a bale (28), and into at least one second position, in which the at least third support roller (42) takes up a supporting position for supporting a bale (28), such that, by pivoting the support-roller holder (44) out of the first position and into a second position, and vice versa, the spacing (A1, A2) between the first support roller (38) and the second or third support roller (40, 42) that is in a supporting position is variable.

2. Bale wrapping device (12) according to Claim 1, **characterized in that** a belt (46) that loops around the support rollers (38, 40, 42) is provided.

3. Bale wrapping device (12) according to Claim 1 or 2, **characterized in that** the second or third support roller (40, 42) that is not in a supporting position takes up a position acting on the belt (46) on an underside of the loop.

4. Bale wrapping device (12) according to one of Claims 1 to 3, **characterized in that** the at least second support roller (40) and the at least third support roller (42) have different diameters.

5. Bale wrapping device (12) according to one of the preceding claims, **characterized in that** the support-roller holder (44) is pivoted manually or by a motor.

6. Bale wrapping device (12) according to one of Claims 1 to 5, **characterized in that** a pivot axle (54) of the support-roller holder (44) is arranged between rotary axles (58, 60) of the support rollers (40, 42), wherein the pivot axle (54) and the rotary axles (58, 60) are arranged in a manner lying on a connecting line with respect to one another.

7. Harvesting appliance (10), preferably of the baler, combination baler or bale wrapping appliance type, having at least one bale wrapping device (12) according to one or more of the preceding patent claims.

8. Method for adapting a bale wrapping device (12) for enveloping a bale (28) with an enveloping material, having a receiving apparatus (26) for receiving the bale (28) during the enveloping operation, and having at least one wrapping arm (30), and the receiving apparatus (26) has a receiving table (36) with horizontally spaced-apart support rollers (38, 40, 42) for supporting a bale (28), wherein a bale (28) is supported by a first support roller (38) at a first circumferential point, and a pivotable support-roller holder (44), on which at least a second and third support roller (40, 42) are mounted, is contained, and the bale wrapping device (12) is adjusted for adaptation to bales (28) with different diameters in such a way that the support-roller holder (44) is pivoted from a first position and into a second position, **characterized in that** the bale is optionally supported by at least the second or third support roller (40, 42) at a second circumferential point that is spaced apart from the first circumferential point around the bale circumference, wherein the support-roller holder (44) is pivoted out of a first position, in which the at least second support roller (40) takes up a supporting position for supporting a bale (28), and into at least one second position, in which the at least third support roller (42) takes up a supporting position for supporting a bale (28), such that, by pivoting the support-roller holder (44) out of the first position and into a second position, and vice versa, the spacing (A1, A2) between the first support roller (38) and the second or third support roller (40, 42) that is in a supporting position is varied.

## Revendications

1. Dispositif d'enrubannage de balles (12) pour envelopper une balle (28) avec un matériau d'enveloppement, comprenant un dispositif de réception (26) pour recevoir la balle (28) pendant l'enveloppement et comprenant au moins un bras d'enrubannage (30), le dispositif de réception (26) présentant une table de réception (36) comprenant des rouleaux de soutien (38, 40, 42) espacés horizontalement les uns des autres pour le soutien d'une balle (28), une balle (28) pouvant être soutenue par un premier rouleau de soutien (38) en un premier point circonférentiel, un support de rouleau de soutien pivotant (44) étant contenu, sur lequel sont montés au moins un deuxième et un troisième rouleau de soutien (40, 42), **caractérisé en ce que** la balle peut être soutenue au choix par au moins le deuxième ou troisième rouleau de soutien (40, 42) en un deuxième point circonférentiel espacé du premier point circonférentiel sur la circonférence de la balle, le support de rouleau de soutien (44) pouvant être pivoté d'une première position, dans laquelle l'au moins un deuxième rouleau de soutien (40) occupe une position de soutien pour le soutien d'une balle (28), à au moins une deuxième position, dans laquelle l'au moins un troisième rouleau de soutien (42) occupe une position de soutien pour le soutien d'une balle (28), de telle sorte que par pivotement du support de rouleau de soutien (44) de la première position à une deuxième position, et inversement, la distance (A1, A2) entre le premier rouleau de soutien (38) et le deuxième ou troisième rouleau de soutien (40, 42) occupant une position de soutien peut être modifiée.

2. Dispositif d'enrubannage de balles (12) selon la revendication 1, **caractérisé en ce qu'**une courroie (46) enroulée autour des rouleaux de soutien (38, 40, 42) est prévue.

3. Dispositif d'enrubannage de balles (12) selon la revendication 1 ou 2, **caractérisé en ce que** le deuxième ou troisième rouleau de soutien (40, 42) n'occupant pas une position de soutien occupe une position d'engagement sur la courroie (46) sur un côté inférieur de l'enroulement.

4. Dispositif d'enrubannage de balles (12) selon l'une quelconque des revendications 1 à 3, **caractérisé en ce que** l'au moins un deuxième rouleau de soutien (40) et l'au moins un troisième rouleau de soutien (42) présentent des diamètres différents.

5. Dispositif d'enrubannage de balles (12) selon l'une quelconque des revendications précédentes, **caractérisé en ce qu'**un pivotement du support de rouleau de soutien (44) est effectué manuellement ou par moteur.

6. Dispositif d'enrubannage de balles (12) selon l'une quelconque des revendications 1 à 5, **caractérisé en ce qu'**un axe de pivotement (54) du support de rouleau de soutien (44) est agencé entre des axes de rotation (58, 60) des rouleaux de soutien (40, 42), l'axe de pivotement (54) et les axes de rotation (58, 60) étant agencés les uns par rapport aux autres en étant situés sur une ligne de liaison.

7. Appareil de récolte (10), de préférence du type d'une presse à balles, d'une presse combinée ou d'un dispositif d'enrubannage de balles, comprenant au moins un dispositif d'enrubannage de balles (12) selon une ou plusieurs des revendications précédentes.

8. Procédé d'adaptation d'un dispositif d'enrubannage de balles (12) pour l'enveloppement d'une balle (28) avec un matériau d'enveloppement, comprenant un dispositif de réception (26) pour recevoir la balle (28) pendant l'enveloppement et comprenant au moins un bras d'enrubannage (30), et le dispositif de réception (26) présentant une table de réception (36) comprenant des rouleaux de soutien (38, 40, 42) espacés horizontalement les uns des autres pour soutenir une balle (28), une balle (28) étant soutenue par un premier rouleau de soutien (38) en un premier point circonférentiel, et un support de rouleau de soutien pivotant (44) étant contenu, sur lequel sont montés au moins un deuxième et un troisième rouleau de soutien (40, 42), et le dispositif d'enrubannage de balle (12) étant réglé pour s'adapter à des balles (28) de diamètres différents de telle sorte que le support de rouleau de soutien (44) est pivoté d'une première position à une deuxième position, **caractérisé en ce que** la balle est soutenue au choix par au moins le deuxième ou troisième rouleau de soutien (40, 42) en un deuxième point circonférentiel espacé du premier point circonférentiel sur la circonférence de la balle, le support de rouleau de soutien (44) étant pivoté d'une première position, dans laquelle l'au moins un deuxième rouleau de soutien (40) occupe une position de soutien pour soutenir une balle (28), à au moins une deuxième position, dans laquelle l'au moins un troisième rouleau de soutien (42) occupe une position de soutien pour soutenir une balle (28), de telle sorte que par pivotement du support de rouleau de soutien (44) de la première position à une deuxième position, et inversement, la distance (A1, A2) entre le premier rouleau de soutien (38) et le deuxième ou troisième rouleau de soutien (40, 42) occupant une position de soutien est modifiée.
